Europäisches Patentamt

European Patent Office

Office européen des brevets

(19)

(11) **EP 1 259 389 B1**

(12) **FASCICULE DE BREVET EUROPEEN**

(45) Date de publication et mention
de la délivrance du brevet:
**12.05.2004 Bulletin 2004/20**

(21) Numéro de dépôt: **01907518.3**

(22) Date de dépôt: **09.02.2001**

(51) Int Cl.$^7$: **B60C 11/12**, B29D 30/06

(86) Numéro de dépôt international:
**PCT/EP2001/001432**

(87) Numéro de publication internationale:
**WO 2001/060641 (23.08.2001 Gazette 2001/34)**

(54) **SCULPTURE DE BANDE DE ROULEMENT DE PNEUMATIQUE**

REIFENLAUFFLÄCHENPROFIL

TYRE TREAD PATTERN

(84) Etats contractants désignés:
**AT BE CH CY DE DK ES FI FR GB GR IE IT LI LU
MC NL PT SE TR**

(30) Priorité: **17.02.2000 FR 0002068**

(43) Date de publication de la demande:
**27.11.2002 Bulletin 2002/48**

(73) Titulaires:
• **Sociéte de Technologie Michelin
63000 Clermont-Ferrand Cedex 09 (FR)**
• **MICHELIN RECHERCHE ET TECHNIQUE S.A.
CH-1763 Granges-Paccot (CH)**

(72) Inventeur: **MERINO LOPEZ, José
F-63200 Riom (FR)**

(74) Mandataire: **Diernaz, Christian
M. F. P. Michelin,
SGD/LG/PI-F35-Ladoux
63040 Clermont-Ferrand Cedex 09 (FR)**

(56) Documents cités:
**EP-A- 0 858 875          WO-A-98/35842
WO-A-98/54009          GB-A- 511 271**

• **PATENT ABSTRACTS OF JAPAN vol. 1996, no.
07, 31 juillet 1996 (1996-07-31) -& JP 08 058317 A
(TOYO TIRE &AMP;RUBBER CO LTD), 5 mars
1996 (1996-03-05)**
• **PATENT ABSTRACTS OF JAPAN vol. 015, no.
381 (M-1162), 26 septembre 1991 (1991-09-26) -&
JP 03 153406 A (TOYO TIRE & RUBBER CO LTD),
1 juillet 1991 (1991-07-01)**

**Description**

L'invention concerne les bandes de roulement destinées notamment à équiper des pneumatiques et plus particulièrement les sculptures de ces bandes. Elle concerne également les moules pour la fabrication de ces bandes de roulement.

Pour améliorer la performance d'adhérence en roulage d'un pneumatique pourvu d'une bande de roulement, il est connu de pourvoir cette bande de roulement avec des motifs de relief, lesdits motifs étant eux-mêmes pourvus d'incisions afin d'accroître le nombre et la longueur d'arêtes actives dans l'aire de contact entre ce pneumatique et le sol. Par incision, on entend des rainures de faible largeur devant la largeur de la bande de roulement (par exemple, pour un pneumatique de véhicule poids lourd, une incision a une largeur inférieure à 1.5 mm). Quand ces incisions ont des profondeurs sensiblement égales à l'épaisseur des motifs de relief, il a été constaté que plus le nombre d'incisions dans l'aise de contact augmente et plus l'émission de bruit en roulage augmente.

Pour réduire le niveau de bruit émis en roulage d'un pneumatique dont la bande de roulement comporte des incisions dont les profondeurs sont sensiblement égales à l'épaisseur des motifs de relief, la demanderesse a proposé, (voir publication WO 98/35842), de réaliser un pontage discret desdites incisions. Dans la demande de brevet publiée sous la référence EP 858875, il est décrit un moule de réalisation d'une bande de roulement pourvue de telles incisions avec pontage, ce moule comportant deux parties, une première partie moulant la face externe de la bande destinée à venir en contact avec le sol pendant le roulage et une deuxième partie de moule moulant la face interne. Dans la configuration de moulage, il est précisé qu'un élément moulant de la première partie de moule est fonctionnellement agencé avec un élément moulant de la seconde partie de moule pour former un même élément moulant et délimiter au moins un orifice laissant passer le mélange de caoutchouc pendant le moulage afin de mouler au moins un pont de liaison. Ce moule, s'il permet effectivement de réaliser des sculptures comportant des incisions et des rainures pourvues de pont de liaison procurant de très bons résultats en bruit, est toutefois d'une mise en oeuvre coûteuse et délicate. Il est, en effet, impératif de réaliser une mise en place suffisamment précise des éléments moulants sur chacune des deux parties de moule afin de réaliser la coopération desdits éléments moulants.

En outre, il est connu, par exemple dans la demande GB 511,271, de réaliser une bande de roulement ayant une première série et une seconde série d'incisions, la première série étant formée d'incisions débouchant sur la surface de roulement de la bande à l'état neuf et ayant des profondeurs uniforme environ moitié de la hauteur des motifs de relief de ladite bande, la seconde série étant formée d'incisions ne débouchant pas sur la surface de roulement de la bande à l'état neuf. Afin de conserver une bonne performance d'adhérence après une usure partielle de la bande (affectant celle-ci sur une partie seulement de son épaisseur) les incisions de la deuxième série apparaissent sur la nouvelle surface de roulement pour conférer à la bande une performance en adhérence sur sol mouillé au moins égale à la performance initiale. Ces incisions de la deuxième série apparaissant sur la surface de roulement après une usure partielle s'étendent elles-mêmes sur une partie seulement de l'épaisseur de la bande voire sur l'épaisseur restante. Ces incisions sont décalées longitudinalement par rapport aux incisions de la première série et peuvent apparaître sur la surface de roulement avant même la disparition totale des premières.

S'il a bien été constaté qu'une bande de roulement pourvue d'une sculpture telle que décrite dans ce dernier document était meilleure en bruit comparativement à une même bande pourvue d'incisions s'étendant sur toute l'épaisseur des motifs de relief, il n'en demeure pas moins que le niveau de performance obtenu est bien moindre qu'avec une même sculpture pourvue d'une pluralité de ponts de liaison reliant les parois principales des incisions.

Le besoin s'est fait sentir d'obtenir une sculpture de bande de roulement qui offre une performance d'adhérence satisfaisante quel que soit le niveau d'usure de cette bande et qui minimise les émissions de bruit pendant le roulage d'un pneumatique équipé d'une telle bande à l'état neuf et également pendant l'usage dudit pneumatique, tout en offrant la possibilité d'une réalisation par moulage qui soit aisée à mettre en oeuvre et économique.

Dans ce but, la bande de roulement selon l'invention d'épaisseur totale E comprend des rainures d'une profondeur P inférieure à E et délimitant des motifs de relief ayant des épaisseurs au plus égales à l'épaisseur E; au moins un de ces motifs est pourvu de premières et de deuxièmes incisions, lesdites incisions étant chacune délimitée par deux surfaces latérales principales reliées par une surface d'extrémité, chacune des premières incisions débouchant sur la surface de roulement de la bande à l'état neuf, chacune des deuxièmes incisions étant entièrement sous la surface de roulement à l'état neuf et s'étendant au moins jusqu'à la profondeur P.

Cette bande de roulement est caractérisée en ce que :

- chaque première incision a une trace continue sur toute surface parallèle à la surface de roulement à l'état neuf comprise entre ladite surface de roulement à l'état neuf et une profondeur minimale P1m au plus égale à 80% de la profondeur maximale P1M de ladite première incision, lesdites profondeurs étant mesurées perpendiculairement à la surface de roulement à l'état neuf; cette trace étant de longueur L1 au moins égale à 75% de la longueur L0 de la trace de la même première incision sur la surface de roulement à l'état neuf ;

- la surface d'extrémité formant le fond de chaque première incision s'étend entre la profondeur minimale P1m et la profondeur maximale P1M, la longueur totale de la trace de cette première incision sur toute surface parallèle à la surface de roulement à l'état neuf et située à une distance comprise entre P1m et P1M diminuant progressivement pour être égale à L1M à la profondeur P1M, cette longueur L1M étant au plus égale à 75% de la longueur L1m de la trace de cette incision à la profondeur P1m,

- chaque deuxième incision a une surface d'extrémité formant le sommet de ladite deuxième incision - correspondant à la surface de l'incision reliant les parois principales de ladite incision et située au plus près de la surface de roulement à l'état neuf - s'étendant entre une profondeur minimale P2m et une profondeur maximale P2M, P2m étant inférieure à P2M, ces profondeurs étant mesurées par rapport à la surface de roulement à l'état neuf, et en ce que

- à chaque première incision est fonctionnellement associée au moins une deuxième incision de façon que pour le motif de relief considéré et dans la zone de contact du pneumatique avec le sol, et quel que soit le niveau d'usure de la bande, la somme des longueurs des traces des premières et deuxièmes incisions sur la surface de roulement soit supérieure à 75% de la longueur des traces des premières incisions dans le contact lorsque la bande de roulement est à l'état neuf.

Par longueur d'une trace d'une incision débouchant sur la surface de roulement à l'état d'usure considéré, on entend la longueur moyenne mesurée le long de l'une des arêtes formées par l'intersection de chaque paroi principale de ladite incision avec ladite surface de roulement

Préférentiellement, la longueur L1M en fond d'incision est au plus égale à la moitié de la longueur L1m de la trace de cette incision à la profondeur P1m.

La sculpture selon l'invention permet à la fois d'obtenir un niveau d'adhérence satisfaisant quel que soit le niveau d'usure grâce à la présence d'une longueur d'arêtes suffisante, lesdites arêtes étant formées par les premières incisions à l'état neuf et les premières et les deuxièmes incisions après usure partielle, et d'obtenir un faible niveau de bruit en roulage. Il est essentiel que chaque première incision, entre P1m et P1M ait sa longueur qui diminue de façon substantielle et qu'en combinaison au moins une deuxième incision présente une région de chevauchement pour compenser cette diminution de longueur.

Préférentiellement, chaque deuxième incision a sa longueur sur toute surface parallèle à la surface de roulement à l'état neuf qui augmente progressivement entre P2m et P2M, le taux d'accroissement étant proportionnel au taux de réduction de longueur de la première incision avec laquelle elle est fonctionnellement agencée. La longueur L2m de la trace de chaque deuxième incision à la profondeur P2m est par exemple inférieure à la moitié de la longueur L2M de la même incision à la profondeur P2M.

Afin de réaliser une transition efficace entre les premières et les deuxième incisions, il est avantageux que ces incisions satisfassent la relation suivante :

- $P1m \leq P2m \leq P1M$.

Il est en outre avantageux de prévoir que ces mêmes deuxièmes incisions vérifient la relation suivante :

- $P1m \leq P2M \leq P1M$,

de manière à ce qu'il y ait un chevauchement partiel des premières incisions avec les deuxièmes incisions.

Une performance optimale est atteinte des lors que les premières incisions vérifient les relations suivantes :

$$P1M\text{-}P1m \geq E/5 \text{ et,}$$

$$0,40 \cdot E \leq P1M\text{+}P1m \leq 0,6 \cdot E$$

où E représente l'épaisseur de la bande de roulement correspondant sensiblement à l'épaisseur totale pouvant être usée en roulage.

En combinaison avec ces domaines de valeurs, il est avantageux que les deuxièmes incisions satisfassent les relations suivantes :

- $P2M\text{-}P2m \geq E/5 \text{ et,}$

- $0,40 \cdot E \leq P2M\text{+}P2M \leq 0\ 60 \cdot E$

De façon préférentielle, les géométries des surfaces d'extrémité (de fond ou de sommet) des premières et deuxièmes incisions forment une pluralité d'ondulations. Par ondulation, on entend soit des formes curvilignes soit des formes géométriques constituées d'une suite de surfaces brisées (c'est-à-dire présentant des inclinaisons différentes) ou encore une combinaison de formes curvilignes et de surfaces brisées. Ces ondulations peuvent être combinées à la fois dans la direction de l'épaisseur de la bande et dans une direction perpendiculaire à cette épaisseur.

Le déposant a en outre constaté que le bruit en roulage était encore réduit en formant des premières incisions présentant en coupe des orientations différentes des orientations des deuxièmes incisions (préférentiellement, les premières incisions sont sensiblement perpendiculaires à la surface de roulement de la bande de roulement à l'état neuf).

L'invention concerne également un moule pour mouler une bande de roulement présentant des surfaces principales extérieure et intérieure reliées par des surfaces latérales, cette bande comportant des premières et des deuxièmes incisions, les premières incisions débouchant sur la surface extérieure formant la surface de roulement de la bande à l'état neuf et les deuxièmes incisions débouchant sur la surface intérieure sans déboucher sur la surface de roulement à l'état neuf.

Dans ce but, il est proposé un moule pour le moulage d'une bande de gomme, ledit moule comportant une matrice supérieure et une matrice inférieure pourvues chacune d'une surface de moulage pour mouler respectivement les faces supérieure et inférieure de la bande, lesdites matrices étant destinées, lorsque le moule est en position de fermeture, à délimiter un volume interne de moulage équivalent au volume de la bande de gomme, les matrices supérieure et inférieure comportant chacune au moins une lamelle, faisant saillie sur leur surface de moulage, destinées à former chacune dans la bande de gomme au moins une incision ne débouchant que sur une des surfaces extérieure et intérieure, lesdites lamelles étant pourvues de faces latérales et de faces d'extrémité joignant les parois latérales, une lamelle de la matrice supérieure étant agencée avec au moins une autre lamelle de la matrice inférieure de façon à présenter un décalage d mesuré dans une direction sensiblement perpendiculaire à la surface de l'une desdites lamelles.

Le moule est caractérisé en ce que les faces d'extrémité des lamelles des matrices supérieure et inférieure ont des géométries passant respectivement par des minima P1m, P2m et des maxima P1M, P2M, lesdits minima et maxima étant mesurés par rapport à la surface de moulage de la matrice supérieure dans la position de fermeture du moule et en ce que P2M satisfait la relation suivante:

$$P1m < P2M < P1M.$$

En outre, le moule selon l'invention est tel que : P1m < P2m < P1M, de façon à ce que le chevauchement des lamelles de la matrice supérieure avec les lamelles de la matrice inférieure soit situé dans une zone préférentielle vis-à-vis de la performance bruit d'une bande moulée dans un moule tel que décrit

Dans le cas où il est prévu sur un même motif de relief plusieurs premières incisions débouchant sur la surface de roulement de la bande de roulement à l'état neuf, lesdites premières incisions étant disposées de manière sensiblement régulière avec un pas p, il est alors avantageux, si d représente la distance moyenne séparant deux incisions, que cette distance d entre une première incision et une deuxième incision soit comprise entre 0,15 et 1,5 fois la valeur du pas p.

Le moule de bande de roulement qui vient d'être décrit peut être employé pour mouler une bande plate non continue ou bien une bande en forme d'anneau; en outre, ce moule peut comporter sur sa matrice supérieure un ou plusieurs autres éléments moulants pour mouler des rainures délimitant des motifs de relief dans la bande de roulement.

Bien entendu, les différentes variantes de bandes de roulement qui sont décrites dans le présent document peuvent être réalisées au moyen d'un moule selon l'invention.

D'autres caractéristiques et avantages de l'invention ressortent de la description faite ci-après en référence aux dessins annexés qui montrent, à titre d'exemples non limitatifs, des formes de réalisation d'un moule et d'une sculpture objet de l'invention.

Figure 1 : vue partielle d'un moule selon l'invention;

Figure 2 : vue en coupe suivant II-II du moule de la figure 1;

Figure 3 : vue en coupe suivant III-III du moule de la figure 1;

Figure 4 : vue partielle d'une variante de moule selon l'invention;

Figure 5 : vue en coupe suivant V-V du moule de la figure 4;

Figure 6 : vue schématique d'un bloc de gomme d'une sculpture de bande de roulement pourvu d'incisions moulées avec un moule tel que montré à la figure 1;

Figure 7 : Variante d'un moule selon l'invention comportant une lamelle dont le profil d'extrémité suit une forme ondulée;

Figure 8 : coupe selon la ligne VIII-VIII du moule de la figure 7;

Figure 9 : vue de la surface d'un bloc de gomme d'une sculpture pourvu de premières incisions et de deuxièmes incisions selon l'invention moulée avec le moule de la figure 7;

Figure 10 : vue en coupe longitudinale d'une variante d'un bloc de sculpture selon l'invention;

Figure 11 vue en coupe, selon la ligne XI-XI, du bloc représenté à la figure 10;

Figure 12 vue en plan d'une sculpture selon l'invention.

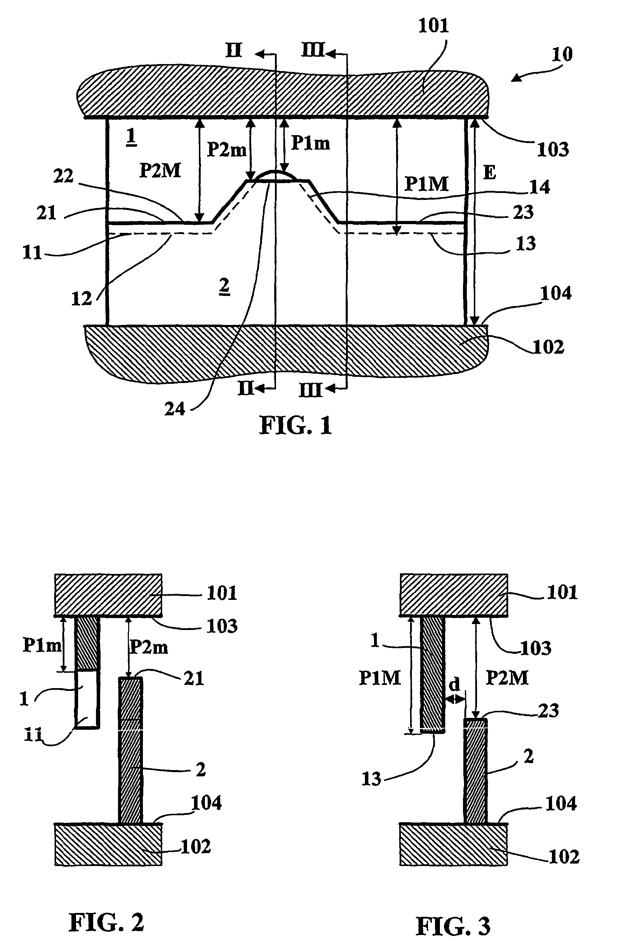

La figure 1 montre un moule selon l'invention dans la configuration de moulage d'une bande de roulement Sur cette figure 1, le moule 10 comporte une partie de moule supérieure 101 et une partie de moule inférieure 102, chaque partie étant pourvue d'une surface de moulage, respectivement 103 et 104, pour mouler respectivement la surface externe et la surface interne de ladite bande (la surface externe correspondant à la surface de roulement). Une pluralité de premières lamelles 1 sont fixées dans la partie supérieure 101 du moule pour faire saillie sur la surface de moulage 103 de cette partie de façon à mouler des incisions débouchant sur la surface de roulement de la bande à l'état neuf. La lamelle 1 représentée sur la figure 1 est de forme plane et de largeur constante jusqu'à une profondeur P1m et comporte une partie d'extrémité 11 dont la génératrice présente sur le plan de la figure 1 une trace qui est composée de deux parties 12, 13 sensiblement rectilignes et parallèles à la trace de la surface de moulage 103 sur le même plan, ces deux parties 12, 13 étant reliées par une partie curviligne 14 s'étendant en direction de la surface de moulage 103. La trace de la partie d'extrémité 11 de la lamelle 1 passe par une distance minimale P1 et par une distance maximale P1M correspondant à la profondeur maximale de l'incision moulée par cette lamelle. La distance P1m est sensiblement égale à la moitié de P1M, tandis que P1M est sensiblement égale à la moitié de la distance E séparant les surfaces de moulage des parties supérieure et inférieure (les distances P1m et P1M étant mesurées par rapport à la surface de moulage 103). De cette façon, la lamelle 1 permet le moulage d'une incision dont le fond n'est pas uniformément à une même profondeur par rapport à la surface de roulement de la bande après moulage. La lamelle 1 moule une incision dont la trace sur une surface parallèle à la surface 103 présente deux traces disjointes dont la longueur totale est sensiblement égale à 75% de la longueur de la même incision sur la surface de roulement à l'état neuf.

En combinaison avec la première série de lamelles, des deuxièmes lamelles 2 sont fixées dans la partie inférieure 102 du moule 10 pour faire saillie sur la surface de moulage 104 de cette partie de façon à mouler des incisions débouchant sur la surface interne de la bande. La lamelle 2 montrée a une forme plane et est limitée par une paroi d'extrémité 21 dont la trace sur le plan de la figure 1 comporte deux parties sensiblement rectilignes 22 et 23 reliées par une partie 24 s'étendant au delà desdites deux parties dans une direction perpendiculaire à la surface de moulage 104 de la partie inférieure 102 du moule. Cette lamelle 2 est destinée au moulage d'une incision débouchant uniquement sur la surface interne de la bande moulée, la trace de la partie d'extrémité 21 de la lamelle 2 passant par une distance minimale P2m et par une distance maximale P2M qui sont, dans le cas présent, inférieures à la distance E séparant les surfaces de moulage des parties supérieure et inférieure.

Il est formé plusieurs régions de chevauchement entre la lamelle 1 de la partie supérieure 101 et la lamelle 2 de la partie inférieure 102, de façon qu'après une usure suffisante de la bande moulée avec ce moule, les incisions moulées par la première lamelle 1 et par la deuxième lamelle 2 débouchent toutes les deux sur la surface de roulement. En outre, ces lamelles vérifient les trois relations suivantes :

$$P1m < P2m < P1M,$$

$$P1m < P2M < P1M,$$

$$P2M \approx E/2.$$

Chacune des premières et des deuxièmes lamelles 1 et 2 est dans le cas présent respectivement sensiblement perpendiculaire à chacune des surfaces de moulage des parties inférieure et supérieure, comme cela est visible sur les figures 2 et 3 montrant le même moule en coupe selon les lignes II-II et III-III; les lamelles 1 et 2 sont distantes entre elles d'une distance d qui est ici sensiblement égale à l'épaisseur desdites lamelles. Pour éviter toute réunion des incisions moulées par lesdites première et deuxième lamelles (par réunion, on entend une continuité des volumes desdites incisions), il est nécessaire que la distance d entre une première et une deuxième lamelle soit plus grande que zéro.

Dans l'exemple décrit, chaque première et deuxième lamelle a une forme générale plane, mais il est bien sûr possible d'employer des lamelles de forme générale curviligne; il est également possible d'avoir une première lamelle de forme plane et une deuxième lamelle de forme ondulée présentant plusieurs ondulations (ou bien l'inverse).

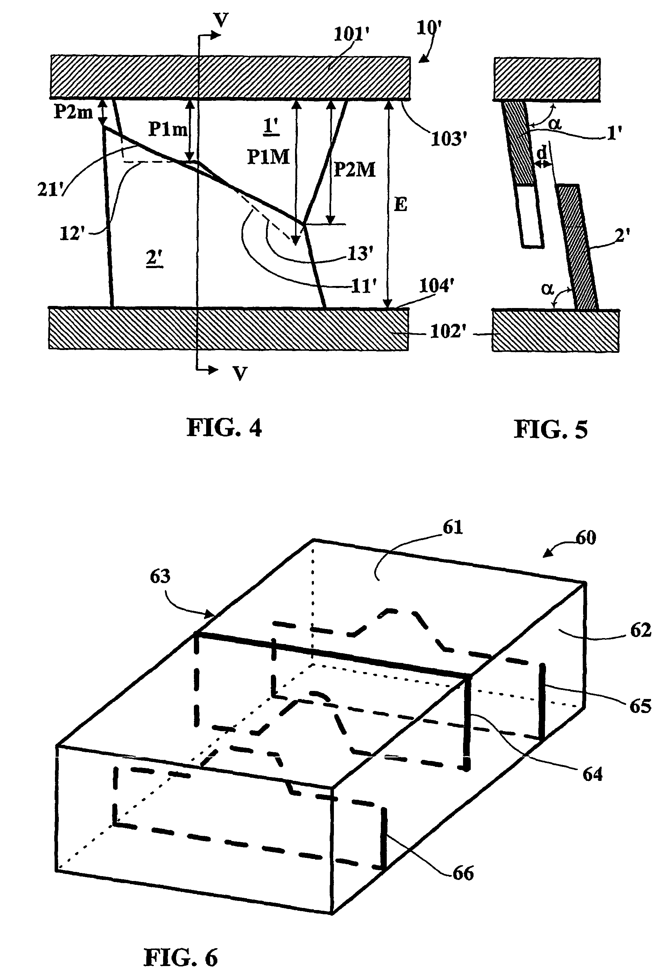

Sur la figure 4, une autre variante d'un moule 10' selon l'invention est représentée dans la configuration de moulage et comporte une partie de moule supérieure 101' et une partie de moule inférieure 102' délimitant un espace de moulage d'épaisseur E. La partie supérieure de moule 101' porte une première lamelle 1' de forme générale plane faisant un angle $\alpha$ différent de 90° avec la surface de moulage 103' de ladite partie de moule comme cela est visible sur la figure 5 montrant une coupe selon la ligne V-V du moule de la figure 4. Cette lamelle 1', destinée au moulage d'une première incision débouchant sur la surface de roulement d'une bande de roulement neuve, comporte une face d'extrémité 11' formée d'une partie 12' sensiblement parallèle à la surface de roulement prolongée par une partie 13' inclinée par rapport à cette surface. La trace 11' de cette face d'extrémité sur le plan de la figure 4 passe par un minimum P1m et par un maximum P1M.

En combinaison avec cette première lamelle 1', la partie inférieure de moule 102' porte une deuxième lamelle 2' plane et de même épaisseur que ladite première lamelle; cette deuxième lamelle 2' est parallèle à ladite première lamelle 1' de façon à être espacée de cette première lamelle d'une distance moyenne d sensiblement égale à l'épaisseur desdites lamelles. La deuxième lamelle 2' est pourvue d'une face d'extrémité 21', représentant le sommet de l'incision moulée avec cette deuxième lamelle, dont la trace 21' est rectiligne et inclinée par rapport à la surface de moulage de la partie supérieure, entre un minimum P2m et un maximum P2M.

Sur la figure 6, un bloc de gomme moulé avec un moule décrit avec la figure 1 est montré. Ce bloc 6 est pourvu de trois incisions 64, 65, 66 débouchant toutes les trois sur deux des faces latérales 62, 63 dudit bloc 6. L'incision intermédiaire 64 est débouchante sur la surface de roulement 61 du bloc 6 à l'état neuf et s'étend au maximum sur une profondeur égale à P2M mesurée par rapport à ladite surface de roulement. Combinées à cette incision intermédiaire 64, il est moulé de part et d'autre de ladite incision 64, une incision 65, 66 débouchant sur la surface interne de la bande moulée et présentant l'avantage d'avoir des régions de chevauchement avec l'incision intermédiaire de manière à maintenir une longueur d'arêtes sur la surface de roulement sensiblement le double de la longueur d'arêtes à l'état neuf et cela quel que soit le niveau d'usure malgré la disparition progressive de l'incision intermédiaire avec l'usure de la bande.

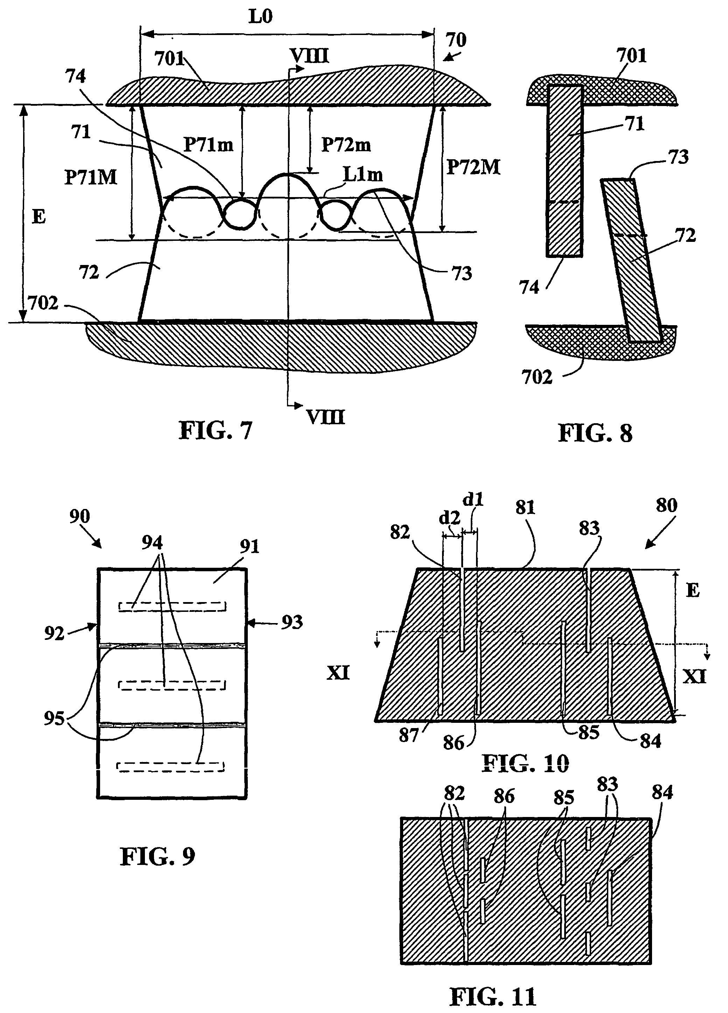

La figure 7 montre une vue partielle d'un exemple de moule 70 selon l'invention comportant une première 71 lamelle montée sur une partie supérieure de moule 701 et une deuxième lamelle 72 montée sur une partie inférieure de moule 702. La lamelle 71 présente, dans le plan de cette figure, une surface d'extrémité 74 formée de trois ondulations sensiblement de même amplitude, cette surface d'extrémité 74 s'étendant entre une profondeur maximale P71M et une profondeur minimale P71m mesurées par rapport à la surface de moulage de la partie de moule 701 (la profondeur minimale P71m étant égale à 80% de la profondeur maximale P71M). La lamelle 71 a une largeur L0 sur la surface de moulage de la partie supérieure 701 correspondant à la longueur de la trace de l'incision moulée par cette lamelle sur la surface de roulement de la bande à l'état neuf. À la profondeur P71m, la trace de l'incision est continue et de longueur L1m sensiblement égale à 80% de L0.

La lamelle 72 comporte une surface d'extrémité 73 présentant trois ondulations, l'ondulation centrale étant d'amplitude supérieure aux deux autres, cette surface d'extrémité 73 s'étendant entre une profondeur maximale P72M et une profondeur minimale P72m mesurées par rapport à la surface de moulage de la partie de moule 701. Ces deux lamelles 71 et 72 sont décalées dans la direction longitudinale de la bande à mouler (voir la figure 8 montrant une coupe selon le plan de coupe VIII-VIII de la figure 7) de manière à mouler une première incision et une deuxième incision de manière à ce que lorsque la première incision commence à disparaître sur la surface de roulement de la bande après usure partielle, la deuxième incision commence à apparaître de manière progressive de manière à ce que la surface de roulement présente en permanence une longueur d'arêtes au moins égale à 75% de la longueur d'arêtes à l'état neuf.

Sur la figure 8, il est représenté une coupe partielle du moule 70 montrant la partie supérieure 701 portant la première lamelle 71 et la partie inférieure 702 portant la deuxième lamelle 72 sensiblement décalée l'une par rapport à l'autre dans le sens longitudinal. L'espace prévu entre les première et deuxième lamelles est sensiblement égal à la moitié de la distance séparant deux premières lamelles de façon à obtenir une rigidité la plus homogène possible et un fonctionnement homogène du motif de relief pourvu des incisions moulées par les premières et deuxième lamelles. La première lamelle 71 est perpendiculaire à la surface de moulage de la partie supérieure 701 tandis que la deuxième lamelle 72 est incliné de façon à ne pas être perpendiculaire à cette surface de moulage.

La demanderesse a procédé à des essais de roulage comparatifs sur des pneumatiques de dimension 315/80 R 22.5 :

- témoin T1 comportant une sculpture pourvue d'incisions débouchant sur la surface de roulement de la bande de roulement à l'état neuf et se prolongeant sur toute la hauteur des motifs de relief;

- témoin T2 comportant une sculpture pourvue des mêmes incisions, elles mêmes pourvues d'une pluralité de ponts de liaison reliant les parois opposées desdites incisions;

- pneumatique selon l'invention (repéré par la lettre A) comportant une même répartition de motifs de relief, chaque motif étant pourvu de premières et de deuxièmes incisions (voir figure 9).

Ces différents pneumatiques ont subi un test de roulage sur véhicule poids lourd sur une piste ISO au cours duquel était mesuré le bruit émis par les pneumatiques en roulage sous couple selon la procédure d'essai ISO 362.

La figure 9 montre la surface de roulement à l'état neuf d'un motif de relief d'une bande de roulement selon l'invention équipant le pneumatique A. Ce motif de relief comporte cinq incisions, deux desdites incisions débouchant à la fois sur ladite surface de roulement et sur deux des parois latérales dudit motif. Ces deux premières incisions disparaissent progressivement entre une profondeur minimale et une profondeur maximale sensiblement égale à la moitié de l'épaisseur dudit motif. En outre, il est prévu, à intervalle régulier dans la direction longitudinale du motif, trois autres incisions s'intercalant avec les deux premières incisions pour prendre le relais desdites premières incisions au fur et à mesure de l'usure du motif de relief

Pour ce pneumatique A, on a : E = 16 mm ; P1m = 5 mm ; P1M = 10 mm ; P2m = 8 mm ; P2M = 10 mm.

La distance d entre premières et deuxièmes incisions dans le sens longitudinal est de 7,5 mm. L'épaisseur des lamelles moulant les premières et deuxièmes incisions est de : 1 mm

Le tableau ci-après résume les écarts obtenus par rapport au témoin T1, les mesures étant réalisées avec des pneumatiques à l'état neuf :

| T1 | base |
|----|------|
| T2 | -5 dbA |
| A | -3dbA |

une valeur positive indique une dégradation, tandis qu'une valeur négative indique une meilleure performance en bruit émis pendant le roulage.

On constate que la sculpture selon l'invention permet d'atteindre un gain qui, s'il n'est pas égal à celui obtenu avec le pneumatique T2 nécessitant un moule coûteux, est cependant très sensible par rapport au témoin T1. Enfin signalons que ce gain en bruit est conservé pendant toute l'utilisation du pneumatique équipé d'une bande de roulement pourvue d'une telle sculpture.

Sur la figure 10 est montré un bloc de gomme vu en coupe. Le bloc 80 comporte deux premières incisions 82, 83 débouchant sur la surface de roulement 81 dudit bloc et s'étendant sur une partie seulement de l'épaisseur E dudit bloc. Ces premières incisions 82, 83 ont une même géométrie et sont destinées à disparaître progressivement entre une profondeur minimale P1m et une profondeur maximale P1M au fur et à mesure de l'usure du bloc 80. En combinaison avec chacune de ces premières incisions, il est moulé deux deuxièmes incisions 84, 85 et 86, 87 ne débouchant pas sur la surface de roulement du bloc à l'état neuf. Chacune desdites deuxièmes incisions est entièrement située sous la surface de roulement à l'état neuf et est prévue pour apparaître progressivement entre une profondeur minimale et une profondeur maximale; en particulier, et au fur et à mesure de l'usure du bloc 80, les deuxièmes incisions 85, 86, situées entre les premières incisions 82, 83, apparaissent sur la surface de roulement avant les incisions 84, 87 qui elles-mêmes apparaissent avant totale disparition des premières incisions 82, 83.

Sur la figure 11, montrant une vue en coupe selon un plan XI-XI du bloc 80 de la figure 10, on peut voir sur la partie gauche du dessin ce qui est obtenu pour un premier niveau d'usure du bloc : en effet, l'incision 82 commence à disparaître progressivement, sa trace sur la nouvelle surface de roulement étant discontinue tandis qu'apparaît l'incision 86 dont la trace discontinue est à une distance moyenne d1. La partie droite du même dessin peut être vue comme une représentation du même bloc à un second niveau d'usure postérieur au premier niveau d'usure. Dans cette configuration, les deux deuxièmes incisions 84 et 85 encadrant la première incision 83 sont apparus sur la surface de roulement tandis que ladite première incision 83 présente une trace sur cette surface de roulement qui est encore réduite par rapport à ce qu'elle était au premier état d'usure considéré.

Cette dernière variante présente de multiple avantages : le fait de disposer d'un plus grand nombre de deuxièmes incisions actives seulement à partir d'une usure minimale du bloc 80 permet une augmentation de la souplesse dudit bloc quel que soit d'ailleurs la distance d1, d2 à partir de la mi usure, avec un gain sensible en adhérence.

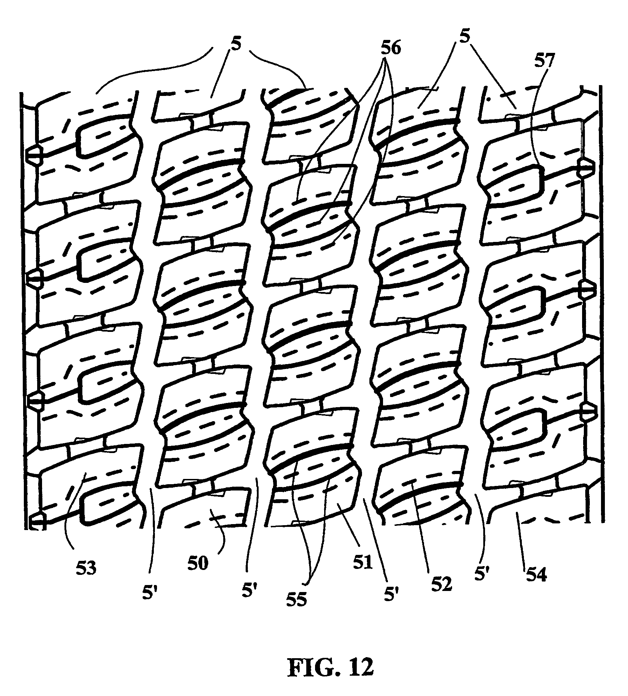

Sur la figure 12 est montrée partiellement la surface d'une bande de roulement selon l'invention comportant cinq rangées 5 de blocs disposés dans la direction circonférentielle d'un pneumatique pour poids lourd et délimités par des rainures sensiblement circonférentielles 5'. Les blocs 50, 51, 52, des rangées centrale et intermédiaires comportent à l'état neuf chacun deux incisions 55 débouchant sur la surface de roulement et sur les parois latérales desdits blocs; en pointillés sont représentées les traces de trois incisions 56 sous jacentes prévues pour apparaître après une usure partielle de la bande. Sensiblement les mêmes dispositions sont reproduites sur les rangées des bords latéraux 53, 54 de la bande, à la différence près de la forme initiale de la trace des premières incisions 57 sur la surface de roulement à l'état neuf.

Dans toutes les variantes présentées ici, il peut être avantageux de pourvoir les premières incisions débouchant sur la surface de roulement à l'état neuf avec des parties sensiblement élargies près des fonds desdites incisions afin d'éviter des problèmes de cassure en fond d'incision qui pourraient mettre en communication lesdites premières incisions avec les deuxièmes incisions sous la surface de roulement et créer alors un bruit de roulage supplémentaire. De même, les premières incisions peuvent avantageusement déboucher sur deux faces latérales des motifs de relief jusqu'à la profondeur minimale P1m pour permettre une évacuation latérale de l'air emprisonné et réduire encore le bruit en roulage (dans le même but, les deuxièmes incisions peuvent également être prévues débouchantes sur les faces latérales des même motifs).

Les exemples qui ont été présentés sont aisément applicables au cas d'incisions présentant des géométries plus complexes et notamment des incisions comprenant des moyens pour assurer un blocage des parois principales desdites incisions dans leurs mouvements l'une par rapport à l'autre.

## Revendications

1. Bande de roulement d'épaisseur totale E comportant des rainures (5') de profondeur P au plus égale à l'épaisseur E délimitant des motifs de relief (50, 51, 52, 53, 54) pourvus d'au moins deux faces latérales, au moins un de ces motifs étant pourvu de premières et de deuxièmes incisions (55, 56, 57), lesdites incisions étant chacune délimitée par deux surfaces latérales principales reliées par une surface d'extrémité, chacune des premières incisions (55, 57) débouchant sur deux faces latérales et sur la surface de roulement de la bande à l'état neuf, chacune des deuxièmes incisions (56) s'étendant au moins jusqu'à la profondeur P,

   • chaque première incision (55, 57), de profondeur maximale P1M, ayant une trace continue sur toute surface parallèle à la surface de roulement à l'état neuf comprise entre ladite surface de roulement à l'état neuf et une profondeur minimale P1m au plus égale à 80% de la profondeur maximale P1M de ladite première incision, lesdites profondeurs étant mesurées perpendiculairement à la surface de roulement à l'état neuf, cette trace étant de longueur L1 au moins égale à 75% de la longueur L0 de la trace de la même première incision sur la surface de roulement à l'état neuf; la bande de roulement étant **caractérisée en ce que** :

     • la surface d'extrémité formant le fond de chaque première incision (55, 57) s'étend entre la profondeur minimale P1m et la profondeur maximale P1M, la longueur totale de la trace de cette première incision sur toute surface parallèle à la surface de roulement à l'état neuf et située à une distance comprise entre P1m et P1M diminuant progressivement pour être égale à L1M à la profondeur P1M, cette longueur L1M étant au plus égale à 75% de la longueur L1m de la trace de cette incision à la profondeur P1m;
     • chaque deuxième incision (56) a une surface d'extrémité formant le sommet de ladite deuxième incision - correspondant à la surface de l'incision reliant les parois principales de ladite incision et située au plus près de la surface de roulement à l'état neuf - s'étendant entre une profondeur minimale P2m et une profondeur maximale P2M, P2m étant inférieure à P2M, ces profondeurs étant mesurées par rapport à la surface de roulement à l'état neuf, et **en ce que**
     • à chaque première incision (55) est fonctionnellement associée au moins une deuxième incision (56) de façon que, pour le motif de relief considéré et dans la zone de contact du pneumatique avec le sol et quel que soit le niveau d'usure de la bande, la somme des longueurs des traces des premières et deuxièmes incisions sur la surface de roulement soit supérieure à 75% de la longueur des traces des premières incisions dans le contact lorsque la bande de roulement est à l'état neuf.

2. Bande de roulement selon la revendication 1 **caractérisée en ce que** la longueur L1M est au plus égale à 50% de la longueur L1m.

3. Bande de roulement selon la revendication 1 ou la revendication 2 **caractérisée en ce que** les deuxièmes incisions (56) sont telles que les longueurs L2m des traces desdites incisions sur une surface sensiblement parallèle à la surface de roulement à l'état neuf située à la distance P2m de cette dernière sont inférieures aux longueurs des traces des mêmes incisions sur une surface située à la distance P2M.

4. Bande de roulement selon l'une quelconque des revendications 1 à 3 **caractérisée en ce que** les premières incisions (55, 57) vérifient la relation suivante :

   • $P1M - P1m \geq E/5$ et,

   • $0{,}40 \cdot E \leq P1M + P1m \leq 0{,}60 \cdot E$

5. Bande de roulement selon la revendication 4 **caractérisée en ce que** les deuxièmes incisions (56) vérifient la relation suivante :

   • $P2M - P2m \geq E/5$ et,

   • $0{,}40 \cdot E \leq P2M + P2m \leq 0{,}60 \cdot E$

6. Bande de roulement selon l'une des revendications 1 à 5 **caractérisée en ce que** les premières et les deuxièmes incisions satisfont les relations suivantes :

   • $P1m < P2m < P1M$

   • $P1m < P2M < P1M$.

7. Bande de roulement selon l'une des revendications 1 à 6 **caractérisée en ce qu'**au moins les deuxièmes incisions présentent des inclinaisons différentes de 90° avec la surface de roulement à l'état neuf.

8. Bande de roulement selon l'une des revendications 1 à 7 **caractérisée en ce que** les premières et les deuxièmes incisions présentent des surfaces d'extrémité présentant une pluralité d'ondulations s'étendant dans la direction de la longueur des traces desdites incisions sur la surface de roulement.

9. Bande de roulement selon l'une des revendications 1 à 8 **caractérisée en ce que** dans le contact, le nombre de deuxièmes incisions (56) ne débouchant pas sur la surface de roulement à l'état neuf est supérieur au nombre de premières incisions (55) débouchant sur la même surface.

10. Bande de roulement selon l'une des revendications 1 à 9 **caractérisée en ce que** les premières incisions débouchent sur deux faces latérales des motifs de relief jusqu'à la profondeur minimale Plm.

11. Pneumatique équipé d'une bande de roulement selon l'une des revendications 1 à 10 destiné à équiper un essieu d'un véhicule poids lourd.

**Patentansprüche**

1. Lauffläche mit einer Gesamtdicke E, die Rillen (5') mit einer Tiefe P höchstens gleich der Dicke E aufweist, die Reliefmuster (50, 51, 52, 53, 54) begrenzen, die mit mindestens zwei Seitenflächen versehen sind, wobei mindestens eines dieser Muster mit ersten und zweiten Einschnitten (55, 56, 57) versehen ist, wobei die Einschnitte je von zwei seitlichen Hauptflächen begrenzt werden, die über eine Endfläche miteinander verbunden sind, wobei jeder der ersten Einschnitte (55, 57) an zwei Seitenflächen und an der Abrolloberfläche der Lauffläche im Neuzustand mündet, während jeder der zweiten Einschnitte (56) sich mindestens bis in die Tiefe P erstreckt,

- wobei jeder erste Einschnitt (55, 57) mit einer maximalen Tiefe P1M im Neuzustand über die ganze Oberfläche parallel zur Abrolloberfläche eine durchgehende Spur hat, die zwischen der Abrolloberfläche im Neuzustand und einer minimalen Tiefe P1m liegt, die höchstens 80% der maximalen Tiefe P1M des ersten Einschnitts beträgt, wobei die Tiefen senkrecht zur Abrolloberfläche im Neuzustand gemessen werden, wobei diese Spur eine Länge L1 mindestens gleich 75% der Länge L0 der Spur des gleichen ersten Einschnitts an der Abrolloberfläche im Neuzustand hat,

**dadurch gekennzeichnet, dass**

- die den Grund jedes ersten Einschnitts (55, 57) bildende Endfläche sich zwischen der minimalen Tiefe P1m und der maximalen Tiefe P1M erstreckt, wobei die Gesamtlänge der Spur dieses ersten Einschnitts über der ganzen Oberfläche parallel zur Abrolloberfläche im Neuzustand und in einer Entfernung zwischen P1m und P1M befindlich sich progressiv verringert, bis sie in der Tiefe P1M gleich L1M ist, wobei diese Länge L1M höchstens gleich 75% der Länge L1m der Spur dieses Einschnitts in der Tiefe P1m ist,

- jeder zweite Einschnitt (56) eine den Scheitel des zweiten Einschnitts bildende Endfläche hat - entsprechend der Oberfläche des Einschnitts, welche die Hauptwände des Einschnitts verbindet und sich der Abrolloberfläche im Neuzustand am nächsten befindet - die sich zwischen einer minimalen Tiefe P2m und einer maximalen Tiefe P2M erstreckt, wobei P2m geringer ist als P2M, wobei diese Tiefen in Bezug auf die Abrolloberfläche im Neuzustand gemessen werden, und dass

- jedem ersten Einschnitt (55) funktionell mindestens ein zweiter Einschnitt (56) zugeordnet ist, derart, dass für das betreffende Reliefmuster und in der Kontaktzone des Luftreifens mit dem Boden, und unabhängig vom Abnutzungsgrad der Lauffläche, die Summe der Längen der Spuren der ersten und zweiten Einschnitte an der Abrolloberfläche mehr als 75% der Länge der Spuren der ersten Einschnitte im Kontakt beträgt, wenn die Lauffläche im Neuzustand ist.

2. Lauffläche nach Anspruch 1, **dadurch gekennzeichnet, dass** die Länge L1M höchstens gleich 50% der Länge L1m ist.

3. Lauffläche nach Anspruch 1 oder 2, **dadurch gekennzeichnet, dass** die zweiten Einschnitte (56) so sind, dass die Längen L2m der Spuren der Einschnitte auf einer Oberfläche im wesentlichen parallel zur Abrolloberfläche im Neuzustand, die sich in der Entfernung P2m zu dieser befindet, kürzer sind als die Längen der Spuren der gleichen Einschnitte auf einer Oberfläche, die sich in der Entfernung P2M befindet.

4. Lauffläche nach einem der Ansprüche 1 bis 3, **dadurch gekennzeichnet, dass** die ersten Einschnitte (55, 57) die folgende Beziehung bestätigen:

- $P1M - P1m \geq E/5$ und
- $0,40 \, E \, E \leq P1M + P1m \leq 0,6 \, E \, E$.

5. Lauffläche nach Anspruch 4, **dadurch gekennzeichnet, dass** die zweiten Einschnitte (56) die folgende Beziehung bestätigen:

- $P2M - P2m \geq E/5$ und
- $0,40 \, E \, E \leq P2M + P2m \leq 0,60 \, E \, E$.

**6.** Lauffläche nach einem der Ansprüche 1 bis 5, **dadurch gekennzeichnet, dass** die ersten und zweiten Einschnitte die folgenden Beziehungen erfüllen:

- P1m < P2m < P1M,
- P1m < P2M < P1M.

**7.** Lauffläche nach einem der Ansprüche 1 bis 6, **dadurch gekennzeichnet, dass** zumindest die zweiten Einschnitte Neigungen ungleich 90° zur Abrolloberfläche im Neuzustand aufweisen.

**8.** Lauffläche nach einem der Ansprüche 1 bis 7, **dadurch gekennzeichnet, dass** die ersten und die zweiten Einschnitte Endflächen mit mehreren Wellenformen aufweisen, die sich in Richtung der Länge der Spuren der Einschnitte auf der Abrolloberfläche erstrecken.

**9.** Lauffläche nach einem der Ansprüche 1 bis 8, **dadurch gekennzeichnet, dass** beim Kontakt die Anzahl von zweiten Einschnitten (56), die nicht an der Abrolloberfläche im Neuzustand münden, größer ist als die Anzahl der an der gleichen Fläche mündenden ersten Einschnitte (55).

**10.** Lauffläche nach einem der Ansprüche 1 bis 9, **dadurch gekennzeichnet, dass** die ersten Einschnitte an zwei Seitenflächen der Reliefmuster bis zur minimalen Tiefe P1m münden.

**11.** Luftreifen, der mit einer Lauffläche nach einem der Ansprüche 1 bis 10 ausgestattet und dazu bestimmt ist, eine Radachse eines Schwerlastwagens zu bestücken.

**Claims**

**1.** A tread of total thickness E comprising grooves (5') of depth P at most equal to the thickness E defining motifs in relief (50, 51, 52, 53, 54) which are provided with at least two lateral faces, at least one of these motifs being provided with first and second incisions (55, 56, 57), said incisions each being defined by two main lateral surfaces connected by an end surface, each of the first incisions (55, 57) opening on to two lateral faces and on to the running surface of the tread when new, each of the second incisions (56) extending at least as far as the depth P:

- each first incision (55, 57), of maximum depth P1M, having a continuous trace over any surface parallel to the running surface when new between said running surface when new and a minimum depth P1m at most equal to 80% of the maximum depth P1M of said first incision, said depths being measured perpendicular to the running surface when new, this trace being of length L1 at least equal to 75% of the length L0 of the trace of the same first incision on the running surface when new; the tread being **characterised in that**

- the end surface forming the bottom of each first incision (55, 57) extends between the minimum depth P1m and the maximum depth P1M, the total length of the trace of this first incision over any surface parallel to the running surface when new and located at a distance of between P1m and P1M decreasing gradually to be equal to L1M at the depth P1M, this length L1M being at most equal to 75% of the length L1m of the trace of this incision at the depth P1m;

- each second incision (56) has an end surface which forms the apex of said second incision - corresponding to the surface of the incision connecting the main walls of said incision and located closest to the running surface when new - extending between a minimum depth P2m and a maximum depth P2M, P2m being less than P2M, these depths being measured relative to the running surface when new, and **in that**

- with each first incision (55) there is functionally associated at least one second incision (56) such that for the motif in relief in question and in the zone of contact of the tyre with the ground, and whatever the level of wear of the tread, the total of the lengths of the traces of the first and second incisions on the running surface is greater than 75% of the length of the traces of the first incisions in contact when the tread is new.

**2.** A tread according to Claim 1, **characterised in that** the length L1M is at most equal to 50% of the length L1m.

**3.** A tread according to Claim 1 or Claim 2, **characterised in that** the second incisions (56) are such that the lengths L2m of the traces of said incisions over a surface substantially parallel to the running surface when new which is located at the distance P2m from the latter are less than the lengths of the traces of the same incisions on a surface located at the distance P2M.

**4.** A tread according to any one of Claims 1 to 3, **characterised in that** the first incisions (55, 57) satisfy the following relationship:

- P1M-P1m $\geq$ E/5 and,

- 0.40 x E $\leq$ P1M+P1m $\leq$ 0.60 x E

5. A tread according to Claim 4, **characterised in that** the second incisions (56) satisfy the following relationship:

- P2M-P2m $\geq$ E/5 and,

- 0.40 x E $\leq$ P2M+P2m $\leq$ 0.60 x E

6. A tread according to one of Claims 1 to 5, **characterised in that** the first and second incisions satisfy the following relationships:

- P1m < P2m < P1M

- P1m < P2M < P1M.

7. A tread according to one of Claims 1 to 6, **characterised in that** at least the second incisions have inclinations other than 90° with the running surface when new.

8. A tread according to one of Claims 1 to 7, **characterised in that** the first and the second incisions have end surfaces having a plurality of undulations extending in the direction of the length of the traces of said incisions on the running surface.

9. A tread according to one of Claims 1 to 8, **characterised in that** in the contact the number of second incisions (56) which do not open on to the running surface when new is greater than the number of first incisions (55) which open on to the same surface.

10. A tread according to one of Claims 1 to 9, **characterised in that** the first incisions open on to two lateral faces of the motifs in relief as far as the minimum depth P1m.

11. A tyre fitted with a tread according to one of Claims 1 to 10, intended to be fitted on an axle of a heavy vehicle.

EP 1 259 389 B1

FIG. 1

FIG. 2

FIG. 3

**FIG. 4**  **FIG. 5**

**FIG. 6**

**FIG. 7**

**FIG. 8**

**FIG. 9**

**FIG. 10**

**FIG. 11**

**FIG. 12**